# EUROPEAN PATENT SPECIFICATION

(11) **EP 3 199 838 B1**
(45) Date of publication and mention of the grant of the patent: **05.12.2018**
(21) Application number: 17153466.2
(22) Date of filing: 27.01.2017
(51) Int. Cl.: F16H 57/04

(54) **FLUID PUMP UNIT**
FLÜSSIGKEITSPUMPENEINHEIT
UNITÉ DE POMPE À FLUIDE

(30) Priority: 28.01.2016 JP 2016013920
(43) Date of publication of application: 02.08.2017
(73) Proprietor: AISIN SEIKI KABUSHIKI KAISHA, Aichi 448-8650 (JP)
(72) Inventor: ITO, Satori, Kariya-shi, Aichi 448-8650 (JP); HAGIMOTO, Wataru, Kariya-shi, Aichi 448-8650 (JP)
(74) Representative: TBK

(56) References cited:
- WO-A1-2006/114970
- US-A1- 2010 242 669
- US-A1- 2013 133 454
- US-A1- 2014 097 043
- US-B1- 6 467 578

## Description

This invention relates to a fluid pump unit according to the preamble of claim 1.

### BACKGROUND DISCUSSION

In the related art, a fluid pump unit provided with an electric pump unit and a cooling unit has been known (e.g., see JP H06-235449 A).

JP H06-235449 A discloses a rotary cooler-equipped transmission provided with a hydraulic pump and a cooler. In the case of the rotary cooler-equipped transmission, the rotary cooler is mounted on the input shaft of the transmission. In addition, a gear box having an oil reservoir is provided in the rotary cooler-equipped transmission. Further, a lubricant stored in the oil reservoir is sucked by the hydraulic pump, and ejected to an inlet flow path of a bearing housing installed in the gear box. The lubricant ejected to the inlet flow path of the gear box is introduced into the rotary cooler to be cooled. The cooled lubricant is discharged from an outlet flow path of the bearing housing. The lubricant discharged from the outlet flow path is introduced into an oil supply port of the bearing housing, and supplied to lubrication points.

In the rotary cooler-equipped transmission (the fluid pump unit) shown in JP H06-235449 A, a connection between the hydraulic pump and the inlet flow path into which the lubricant discharged from the hydraulic pump is introduced (between the oil supply port and the outlet flow path through which the lubricant cooled by the rotary cooler is discharged) is not specified, but is generally considered to be established via piping. However, in a case in which the hydraulic pump and the inlet flow path (the oil supply port) (the rotary cooler and the oil supply port) are connected via the piping, the piping is disposed to protrude to the outside of the rotary cooler-equipped transmission, and as a result, there is a problem in that the fluid pump unit is enlarged to that extent.

US 2013/133454 A1 shows a generic fluid pump unit according to the preamble of claim 1, which comprises an electric pump unit configured to circulate a fluid in a gear mechanism; a cooling unit configured to cool the circulating fluid; and a flow path distribution member disposed on the gear mechanism and including therein a first flow path connected to the electric pump unit and a second flow path connected to the cooling unit. The electric pump unit and the cooling unit are installed on the flow path distribution member.

US 6 467 578 B1 shows another fluid pump unit according to the prior art.

### SUMMARY OF THE INVENTION

It is the object of this invention to further develop a fluid pump unit according to the preamble of claim 1 such that a compact size of the fluid pump unit is provided.

The object of this invention is achieved by a fluid pump unit having the features of claim 1.

Further advantageous developments of this invention are defined in the dependent claims.

As described above, the fluid pump unit according to the aspect of this invention includes the flow path distribution member that is provided with the electric pump unit and the cooling unit, and includes therein the first flow path connected to the electric pump unit and the second flow path connected to the cooling unit. Therefore, because the first flow path connected to the electric pump unit and the second flow path connected to the cooling unit are disposed in the flow path distribution member, the enlargement of the fluid pump unit can be inhibited unlike the case in which a flow path is connected to the electric pump unit and the cooling unit is configured with piping disposed to protrude to the outside of the fluid pump unit.

In addition, because the first flow path connected to the electric pump unit and the second flow path connected to the cooling unit are disposed in the flow path distribution member, it is possible to dispose the first flow path and the second flow path such that the first flow path and the second flow path are concentrated within the flow path distribution member (to be adjacent to each other). Therefore, unlike the case in which the first flow path and the second flow path are configured with separate members (piping and the like), the increase of the number of components and the complication of the configuration can be inhibited, and the enlargement of the fluid pump unit can be further inhibited.

In addition, because the electric pump unit and the cooling unit are installed on the flow path distribution member, the electric pump unit, the cooling unit, and the flow path distribution member are attached to the gear mechanism in an integrated state. Therefore, unlike the case in which the electric pump unit and the cooling unit are individually attached to the gear mechanism, and then each of the electric pump unit, the cooling unit, and the gear mechanism is connected by piping, the operation of attaching the electric pump unit and the cooling unit can be simplified. In addition, unlike the case in which the electric pump unit and the cooling unit are mounted directly to the gear mechanism, it is not necessary to provide a space for attaching the electric pump unit and the cooling unit in the gear mechanism.

The flow path distribution member has a plate shape, the cooling unit is installed on a first surface of the plate-shaped flow path distribution member, and the electric pump unit is installed on a second surface that is different from the first surface.

Since the cooling unit and the electric pump unit are disposed on the different surfaces, it is possible to decrease the size of one surface that constitutes the plate-shaped flow path distribution member (i.e., the size of the plate-shaped flow path distribution member) compared with the case in which the cooling unit and the electric pump unit are disposed in parallel with each other on the same surface. As a result, the length of the first flow path and the second flow path installed in the flow path distribution member can be inhibited from increasing.

The first surface is a surface located at the opposite side to a side of the flow path distribution member which is disposed on a side of the gear mechanism, and the second surface is a side surface of the flow path distribution member which is orthogonal to the first surface.

The discharge direction (introduction direction) of the fluid from the cooling unit can be made to be orthogonal to the ejection direction (suction direction) of the fluid from the electric pump unit. Thus, the flow path, which interconnects the electric pump unit and the cooling unit, may be configured with rectilinear orthogonal flow paths. Therefore, unlike the case in which the flow path, which interconnects the electric pump unit and the cooling unit, is curved, the length of the flow path can be inhibited from being increased.

It is preferable that an ejection port and a suction port of the electric pump unit are connected to the first flow path in a liquid-tight manner, and a discharge port and an introducing port of the cooling unit are connected to the second flow path in a liquid-tight manner.

With this preferred configuration, unlike the case in which the first flow path and the ejection port and the suction port of the electric pump unit (the second flow path and the discharge port and the introducing port of the cooling unit) are connected to each other via piping, the enlargement of enlargement of the fluid pump unit can be further inhibited.

It is preferable that the fluid pump unit further includes an orifice which is provided in the second flow path and which is configured to adjust a flow rate of the fluid.

With this preferred configuration, because the orifice is attached to (in) the second flow path in the flow path distribution member, the orifice may also be mounted to the gear mechanism in the integrated state, in addition to the electric pump unit, the cooling unit, and the flow path distribution member. In addition, because the flow rate (liquid amount) of the fluid is adjustable using the orifice, the capacity of the electric pump unit can be properly set (decreased). That is, the capacity of the electric pump unit can be suppressed from being set excessively high.

It is preferable that the fluid pump unit further includes a detecting unit which is provided in the flow path distribution member and which is configured to detect a state of the fluid.

With this preferred configuration, because the detecting unit is attached within the flow path distribution member, the detecting unit may also be attached to the gear mechanism in the integrated state, in addition to the electric pump unit, the cooling unit, and the flow path distribution member. In addition, the operation of the electric pump unit can be optimized according to the state of the fluid detected by the detecting unit.

In the fluid pump unit according to the aspect, the following configurations may also be contemplated.

In the fluid pump unit, the second flow path may be configured such that the fluid discharged from the cooling unit diverges and flows into the gear mechanism.

In the fluid pump unit, the detecting unit may be include at least one of a fluid temperature sensor and a fluid pressure sensor.

In the fluid pump unit, each of the first flow path and the second flow path may be configured with plural rectilinear orthogonal flow paths.

### BRIEF DESCRIPTION OF THE DRAWINGS

The foregoing, additional features, effects and advantages of this invention will become more apparent from the following detailed description considered with the reference to the accompanying drawings, wherein:
Fig. 1 is a block diagram of an oil pump unit and a gear mechanism according to an embodiment disclosed here;
Fig. 2 is a perspective view of an oil pump unit according to the embodiment disclosed here;
Fig. 3 is an exploded perspective view of Fig. 2;
Fig. 4 is a side view of the oil pump unit according to the embodiment disclosed here when viewed in a Y direction;
Fig. 5 is a cross-sectional view taken along line V-V in Fig. 4;
Fig. 6 is a cross-sectional view taken along line VI-VI in Fig. 4;
Fig. 7 is a side view of the oil pump unit according to the embodiment disclosed here when viewed in an X direction;
Fig. 8 is a cross-sectional view taken along line VIII-VIII in Fig. 7;
Fig. 9 is a cross-sectional view taken along line IX-IX in Fig. 8;
Fig. 10 is a cross-sectional view taken along line X-X in Fig. 8; and
Fig. 11 is a cross-sectional view taken along line XI-XI in Fig. 8.

### DETAILED DESCRIPTION

Hereinafter, an embodiment disclosed here will be described based on the drawings.

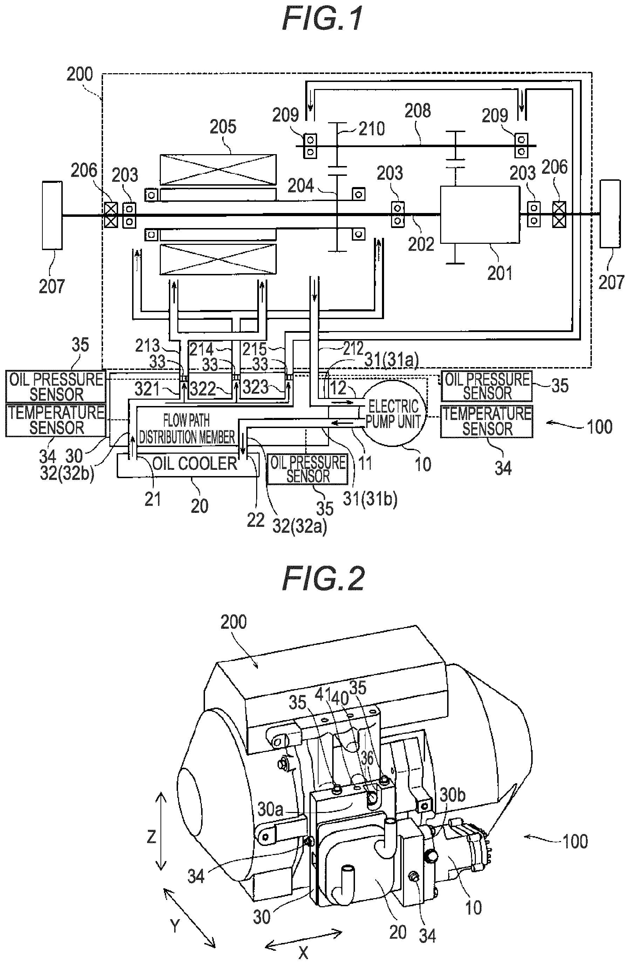

An oil pump unit 100 (an example of a fluid pump unit) according to an embodiment disclosed here will be described with reference to Figs. 1 to 11. Further, "orthogonal" in the specification is a wide concept including "intersecting at an angle of about 90 degrees" in addition to "intersecting at an angle of 90 degrees".

### (Schematic Configuration of Gear Mechanism)

As illustrated in Figs. 1, 2, 4, and 7, the oil pump unit 100 is attached to a gear mechanism 200. As illustrated in Fig. 1, the gear mechanism 200 is provided with a differential gear 201. A shaft 202 is connected to the differential gear 201. The shaft 202 is supported by plural bearings 203. In addition, a gear 204 and a motor generator 205 are connected to the shaft 202. In addition, the wheels 207 of a vehicle are connected to one end and the other end of the shaft 202 via oil seals 206. In addition, the gear mechanism 200 is provided with a shaft 208 disposed in parallel with the shaft 202. The shaft 208 is supported by plural bearings 209. In addition, a gear 210 is connected to the shaft 208.

### (Configuration of Oil Pump Unit)

As illustrated in Fig. 1, the oil pump unit 100 is provided with an electric pump unit 10 configured to circulate oil (an example of a fluid) in the gear mechanism 200. The electric pump unit 10 has an ejection port 11 and a suction port 12. In addition, the oil pump unit 100 is provided with an oil cooler 20 (an example of a cooling unit) configured to cool the circulating oil. The oil cooler 20 has a discharge port 21 and an introducing port 22.

Here, in the present embodiment, the oil pump unit 100 is provided with an oil passage distribution member 30 (an example of a flow path distribution member). The oil passage distribution member 30 is disposed on the gear mechanism 200. Specifically, the oil passage distribution member 30 is directly attached to the gear mechanism 200. In addition, the electric pump unit 10 and the oil cooler 20 are installed in the oil passage distribution member 30. Further, the oil passage distribution member 30 includes therein an oil passage 31 (an example of a first oil passage) connected to the electric pump unit 10. In addition, the oil passage distribution member 30 includes therein an oil passage 32 (an example of a second flow path) connected to the oil cooler 20. Further, the oil passage distribution member 30 is made of aluminum or the like. In addition, the oil passage 31 and the oil passage 32 are formed by machining (opening a hole in) the oil passage distribution member 30 by using a drill or the like.

Specifically, the oil passage 31 has an oil passage 31a that connects the gear mechanism 200 and the suction port 12 of the electric pump unit 10 to each other. In addition, the oil passage 31 has an oil passage 31b connected to the ejection port 11 of the electric pump unit 10. The oil passage 32 has an oil passage 32a connected to the introducing port 22 of the oil cooler 20. In addition, the oil passage 32 has an oil passage 32b connected to the discharge port 21 of the oil cooler 20. Further, the oil passage 31b connected to the ejection port 11 of the electric pump unit 10 and the oil passage 32a connected to the introducing port 22 of the oil cooler 20 are connected to each other (forming a single oil passage).

The oil passage 32 (the oil passage 32b) is configured such that the oil discharged from the oil cooler 20 diverges and flows into the gear mechanism 200. Specifically, the oil passage 32 (the oil passage 32b) has three oil passages, that is, an oil passage 321, an oil passage 322, and an oil passage 323 which branch off from the oil passage 32b.

In the present embodiment, the suction port 12 of the electric pump unit 10 is connected to the oil passage 31a in a liquid-tight manner. The ejection port 11 of the electric pump unit 10 is connected to the oil passage 31b in a liquid-tight manner. The introducing port 22 of the oil cooler 20 is connected to the oil passage 32a in a liquid-tight manner. The discharge port 21 of the oil cooler 20 is connected to the oil passage 32b in a liquid-tight manner. Further, the "liquid-tight manner" is a concept including a state in which the electric pump unit 10 (the oil cooler 20) is connected directly to the oil passages, or the electric pump unit 10 (the oil cooler 20) is connected to the oil passages via seal members (packing, etc.).

In the present embodiment, the oil passage 32 is provided with orifices 33 for adjusting a flow rate of the oil. Specifically, the orifices 33 are provided in the oil passage 321, the oil passage 322, and the oil passage 323, respectively, where the oil cooled by the oil cooler 20 circulates. In addition, the orifice 33 is configured with an opening (throttle hole) having a diameter smaller than an oil passage diameter of the oil passages 321 to 323. In addition, the orifices 33 are provided in the vicinity of outlets (downstream sides) of the oil of the oil passage 321, the oil passage 322, and the oil passage 323.

In the present embodiment, a temperature sensor 34 (an example of a detecting unit) and an oil pressure sensor 35 (an example of a detecting unit) are provided in the oil passage distribution member 30 to detect a state of the oil. Specifically, the temperature sensor 34 is provided in each of the oil passage 31a where the oil to be sucked into the electric pump unit 10 circulates and the oil passage 32b where the oil cooled by the oil cooler 20 circulates. The oil pressure sensor 35 is provided in each of the oil passage 31b (oil passage 32a) where the oil ejected from the electric pump unit 10 circulates, the oil passage 321 where the cooling oil cooled by the oil cooler 20 circulates, and the oil passage 323 where the lubricant cooled by the oil cooler 20 circulates.

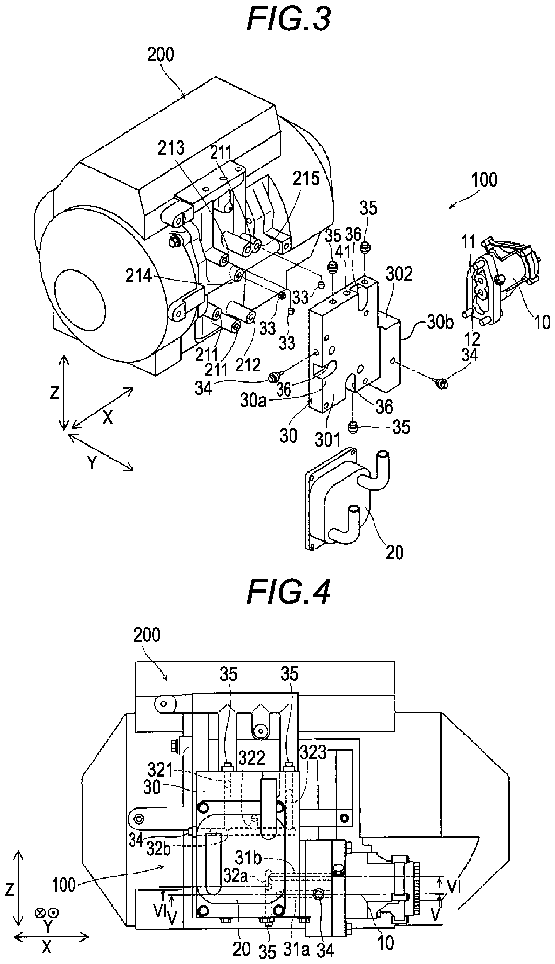

In the present embodiment, as illustrated in Fig. 3, the oil passage distribution member 30 has a plate shape. Further, the oil cooler 20 is installed on a surface 30a (an example of a first surface) of the plate-shaped oil passage distribution member 30. In addition, the electric pump unit 10 is installed on a surface 30b (an example of a second surface) different from the surface 30a. Specifically, the surface 30a is a surface located at the opposite side to a side of the oil passage distribution member 30 which is disposed on the gear mechanism 200, and the surface 30b is a side surface of the oil passage distribution member 30 which is orthogonal to the surface 30a. Further, the oil passage distribution member 30 includes a plate-shaped first portion 301 and a plate-shaped second portion 302. Further, the oil cooler 20 is installed on the surface 30a of the first portion 301, and the electric pump unit 10 is installed on the surface 30b of the second portion 302.

As illustrated in Fig. 3, the oil passage distribution member 30 has concave portions 36 penetrated by screws 40 (see Fig. 2) for fixing the oil passage distribution member 30 to the gear mechanism 200. The concave portions 36 are opened outward from the oil passage distribution member 30, and have an approximately U shape in a plan view. The concave portions 36 are configured such that the screws 40, which fix the oil passage distribution member 30, are prevented from protruding from the surface of the oil passage distribution member 30. In addition, the oil passage distribution member 30 is fixed directly to the gear mechanism 200 (in a liquid-tight manner) as the screws 40 are thread-coupled to bosses 211 provided on the gear mechanism 200 through the concave portions 36.

Next, detailed configurations of the oil passage 31 and the oil passage 32 will be described with reference to Figs. 3, 5, 6, and 8 to 11.

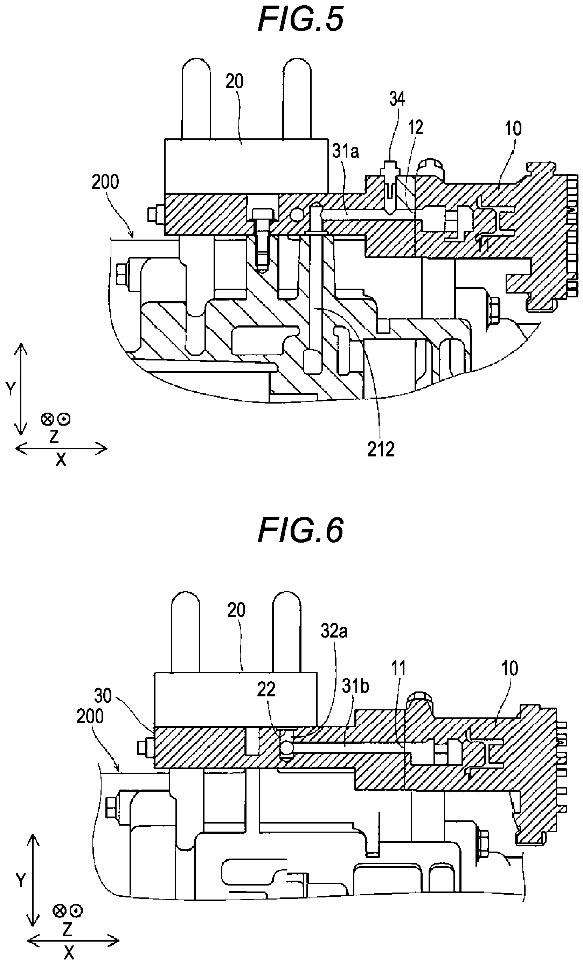

As illustrated in Fig. 5, the oil passage 31a connected to the suction port 12 of the electric pump unit 10 is connected to an oil passage 212 of the gear mechanism 200. In addition, the oil passage 31a is configured with plural rectilinear orthogonal oil passages (oil passages formed to extend in the X direction, the Y direction, or the Z direction). In addition, the oil passage 31a (oil passage distribution member 30) is connected to the oil passage 212 (gear mechanism 200) in a liquid-tight manner. In addition, the temperature sensor 34 is provided in the oil passage 31a in the vicinity of the suction port 12 of the electric pump unit 10.

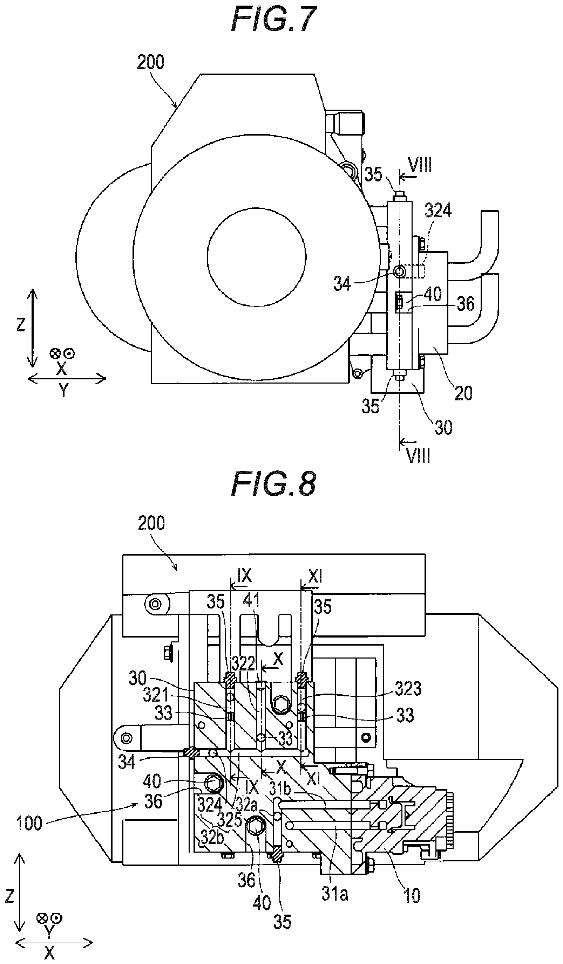

As illustrated in Fig. 6, the oil passage 31b connected to the ejection port 11 of the electric pump unit 10 is configured with plural rectilinear orthogonal oil passages. In addition, the oil passage 32a connected to the introducing port 22 of the oil cooler 20 is formed to extend rectilinearly in the Y direction. In addition, the oil pressure sensor 35 (see Fig. 8) is provided in the oil passage 31b (oil passage 32a). The oil pressure sensor 35 is inserted into the oil passage 31b (oil passage 32a) formed by a hole that formed by a drill or the like. The hole (oil passage) formed by the drill or the like is sealed by the oil pressure sensor 35.

As illustrated in Fig. 8, the oil passage 32b connected to the discharge port 21 of the oil cooler 20 includes an oil passage 324 (see Fig. 7) which is formed to extend rectilinearly in the Y direction, and an oil passage 325 which is connected to the oil passage 324 and formed to extend rectilinearly in the X direction. Further, the oil passage 321, the oil passage 322, and the oil passage 323 branch off from the oil passage 325.

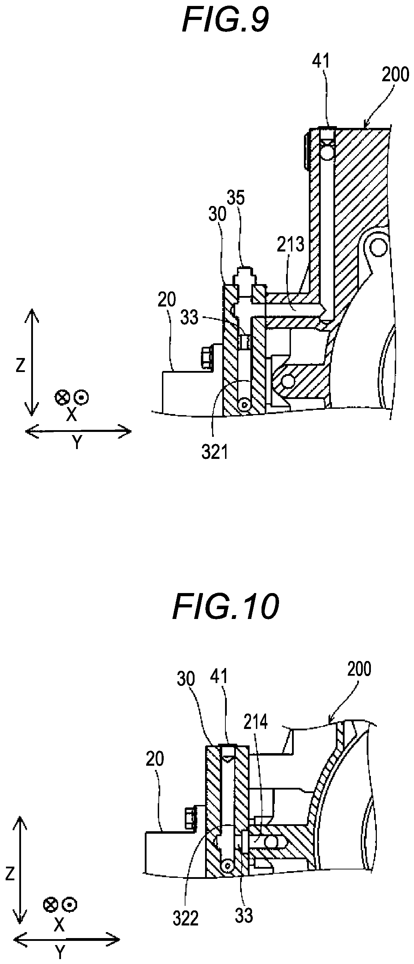

As illustrated in Fig. 9, the oil passage 321, which is one of the three branch oil passages, is configured with the plural rectilinear orthogonal oil passages. In addition, the oil pressure sensor 35 is inserted into the oil passage 321. In addition, the orifice 33 is disposed in the oil passage 321. In addition, the oil passage 321 is connected to an oil passage 213 provided in the gear mechanism 200. The oil passage 321 is connected to the oil passage 213 in a liquid-tight manner.

As illustrated in Fig. 10, the oil passage 322 is configured with plural rectilinear orthogonal oil passages. In addition, a plug member 41 configured to seal the oil passage 322 is inserted into the oil passage 322. In addition, the orifice 33 is disposed in the oil passage 322. In addition, the oil passage 322 is connected to an oil passage 214 provided in the gear mechanism 200 in a liquid-tight manner.

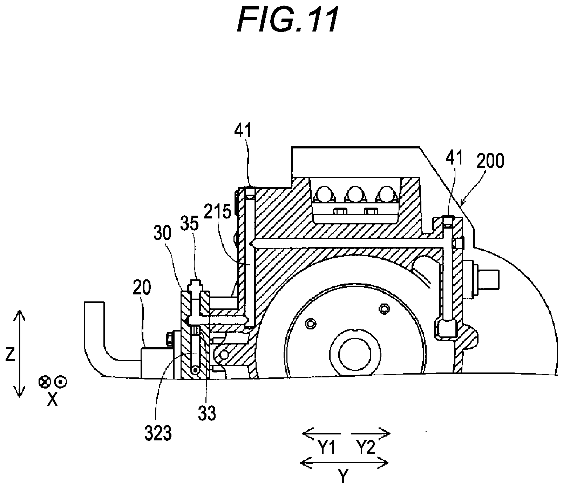

As illustrated in Fig. 11, the oil passage 323 is configured with plural rectilinear orthogonal oil passages. In addition, the oil pressure sensor 35 is inserted into the oil passage 323. In addition, the orifice 33 is disposed in the oil passage 323. In addition, the oil passage 323 is connected to an oil passage 215 provided in the gear mechanism 200 in a liquid-tight manner. Further, the oil passage 215 is formed to extend from a side (a side in a Y1 direction) of the gear mechanism 200 where the oil passage distribution member 30 is disposed to a side (a side in a Y2 direction) of the gear mechanism 200 opposite to the oil passage distribution member 30. Further, the plug member 41 is inserted into an opening portion of the oil passage 215.

As illustrated in Figs. 3 and 4, the three branch oil passages, that is, the oil passage 321, the oil passage 322, and the oil passage 323, are connected in a liquid-tight manner to the oil passage 213, the oil passage 214, and the oil passage 215, respectively, which are provided to protrude from the gear mechanism 200 and have a boss shape.

Next, a flow of oil will be described with reference to Fig. 1.

The oil cooled by the oil cooler 20 is supplied, as a cooling oil, to the motor generator 205 through the oil passage 321. In addition, the oil cooled by the oil cooler 20 is supplied, as a lubricant, to the bearing 203, the bearing 209, the oil seal 206, the gear 204, and the gear 210 through the oil passage 322 and the oil passage 323. Further, the oil, which is used as the cooling oil and the lubricant, is sucked into the suction port 12 of the electric pump unit 10 from the gear mechanism 200 through the oil passage 31a. Further, the oil ejected from the ejection port 11 of the electric pump unit 10 is introduced into the oil cooler 20 through the oil passage 31b and the oil passage 32a to be cooled.

### (Effect of Present Embodiment)

According to the present embodiment, the following effects may be obtained.

In the present embodiment, as described above, the electric pump unit 10 and the oil cooler 20 are installed, and the oil passage distribution member 30, which includes therein the oil passage 31 connected to the electric pump unit 10 and the oil passage 32 connected to the oil cooler 20, is provided. Therefore, because the oil passage 31 connected to the electric pump unit 10 and the oil passage 32 connected to the oil cooler 20 are disposed in the oil passage distribution member 30, the enlargement of the oil pump unit 100 can be inhibited unlike the case in which an oil passage connected to the electric pump unit 10 and the oil cooler 20 is configured with piping disposed to protrude to the outside of the oil pump unit 100.

Because the oil passage 31 connected to the electric pump unit 10 and the oil passage 32 connected to the oil cooler 20 are disposed in the oil passage distribution member 30, the oil passage 31 and the oil passage 32 can be disposed in such a manner that the oil passage 31 and the oil passage 32 are concentrated in (adjacent to) the oil passage distribution member 30. Therefore, unlike the case in which the oil passage 31 and the oil passage 32 are configured with separate members (piping, etc.), the increase of the number of components and the complication of the configuration can be inhibited, and the enlargement of the oil pump unit 100 can be further inhibited.

Because the electric pump unit 10 and the oil cooler 20 are installed in the oil passage distribution member 30, the electric pump unit 10, the oil cooler 20, and the oil passage distribution member 30 can be attached to the gear mechanism 200 in an integrated state. Therefore, unlike the case in which the electric pump unit 10 and the oil cooler 20 are individually attached to the gear mechanism 200 and then each of the electric pump unit 10, the oil cooler 20, and the gear mechanism 200 is connected by piping, the operation of attaching the electric pump unit 10 and the oil cooler 20 can be simplified. In addition, unlike the case in which the electric pump unit 10 and the oil cooler 20 are attached directly to the gear mechanism 200, it is not necessary to provide a space for mounting the electric pump unit 10 and the oil cooler 20 in the gear mechanism 200.

In the present embodiment, as described above, the ejection port 11 and the suction port 12 of the electric pump unit 10 are connected to the oil passage 31 in a liquid-tight manner, and the discharge port 21 and the introducing port 22 of the oil cooler 20 are connected to the oil passage 32 in a liquid-tight manner. Therefore, unlike the case in which the oil passage 31 and the ejection port 11 and the suction port 12 of the electric pump unit 10 (the oil passage 32 and the discharge port 21 and the introducing port 22 of the oil cooler 20) are connected to each other via piping, the enlargement of the oil pump unit 100 can be further inhibited.

In the present embodiment, as described above, the oil passage distribution member 30 has a plate shape, the oil cooler 20 is installed on the surface 30a of the plate-shaped oil passage distribution member 30, and the electric pump unit 10 is installed on the surface 30b different from the surface 30a. Therefore, because the oil cooler 20 and the electric pump unit 10 are disposed on the different surfaces, the size of one surface that constitutes the plate-shaped oil passage distribution member 30 (i.e., a size of the plate-shaped oil passage distribution member 30) can be decreased compared to the case in which the oil cooler 20 and the electric pump unit 10 are disposed in parallel on the same surface. As a result, lengths of the oil passage 31 and the oil passage 32 provided in the oil passage distribution member 30 can be inhibited from increasing.

In the present embodiment, as described above, the surface 30a is a surface opposite to a side of the oil passage distribution member 30 which is disposed at the gear mechanism 200, and the surface 30b is a side surface of the oil passage distribution member 30 which is orthogonal to the surface 30a. Therefore, because the discharge direction (introduction direction) of the oil from the oil cooler 20 may be made to be orthogonal to the ejection direction (suction direction) of the oil from the electric pump unit 10, the oil passage, which connects the electric pump unit 10 and the oil cooler 20, may be configured with rectilinear orthogonal oil passages. Therefore, unlike the case in which an oil passage, which connects the electric pump unit 10 and the oil cooler 20, is curved, the length of the oil passage can be inhibited from increasing.

In the present embodiment, as described above, the orifices 33 configured to adjust a flow rate of the oil are provided in the oil passage 32. Therefore, because the orifices 33 are attached to the oil passage 32 in the oil passage distribution member 30, the orifices 33, may also be mounted to the gear mechanism 200 in the integrated state, in addition to the electric pump unit 10, the oil cooler 20, and the oil passage distribution member 30. In addition, because the flow rate (liquid amount) of the oil is adjustable by using the orifice 33, the capacity of the electric pump unit 10 can be properly set (decrease). That is, the capacity of the electric pump unit 10 can be suppressed from being set to be excessively high.

In the present embodiment, as described above, the temperature sensor 34 and the oil pressure sensor 35, which detect a state of the oil, are installed in the oil passage distribution member 30. Therefore, because the temperature sensor 34 and the oil pressure sensor 35 are mounted in the oil passage distribution member 30, the temperature sensor 34 and the oil pressure sensor 35 may also be attached to the gear mechanism 200 in the integrated state, in addition to the electric pump unit 10, the oil cooler 20, and the oil passage distribution member 30. In addition, the operation of the electric pump unit 10 can be optimized based on the state of the oil detected by the temperature sensor 34 and the oil pressure sensor 35.

In the present embodiment, as described above, the oil passage 32 is configured such that the oil discharged from the oil cooler 20 diverges and flows into the gear mechanism 200. Therefore, the oil discharged from the oil cooler 20 may be used for different purposes (cooling and lubrication).

In the present embodiment, as described above, each of the oil passage 31 and the oil passage 32 is configured with plural rectilinear orthogonal oil passages. Therefore, the oil passages can be easily formed by opening holes in the oil passage distribution member 30 by using a tool such as a drill.

### [Modifications]

For example, in the embodiment, an example in which the circulating fluid is the oil has been described, but the embodiment disclosed here is not limited thereto. For example, the embodiment disclosed here may be applied to a pump unit in which a fluid such as water other than the oil circulates.

In the embodiment, an example in which the oil passage distribution member has a plate shape has been described, but the embodiment disclosed here is not limited thereto. In the embodiment disclosed here, the oil passage distribution member may have a shape other than the plate shape as long as the oil passages, which are connected to the gear mechanism, the electric pump unit, and the oil cooler, are formed in the oil passage distribution member.

In the embodiment, an example in which the oil cooler is installed on the surface opposite to a side of the oil passage distribution member which is disposed on the gear mechanism and the electric pump unit is installed on a side surface of the oil passage distribution member has been described, but the embodiment disclosed here is not limited thereto. For example, the oil cooler and the electric pump unit may be installed on a surface other than the surface opposite to the side which is disposed at the gear mechanism, and the side surface.

In the embodiment, an example in which the orifices are provided in the oil passages through which the oil discharged from the oil cooler circulates has been described, but the embodiment disclosed here is not limited thereto. For example, the orifices may be provided at a side where the oil is introduced into the oil cooler, a side where the oil is sucked into the electric pump unit, and the like.

In the embodiment, an example in which the temperature sensor and the oil pressure sensor are installed in the oil pump unit (oil passage distribution member) has been described, but the embodiment disclosed here is not limited thereto. For example, a sensor (oil amount sensor and the like) other than the temperature sensor and the oil pressure sensor may be installed in the oil pump unit (oil passage distribution member).

In the embodiment, an example in which the oil discharged from the oil cooler diverges into the three oil passages has been described, but the embodiment disclosed here is not limited thereto. For example, the oil discharged from the oil cooler may diverge into oil passages the number of which is not three, or may not diverge.

In the embodiment, an example in which the oil passage is configured with plurality rectilinear oil passages orthogonal to one another (that intersect at an angle of about 90 degrees) has been described, but the embodiment disclosed here is not limited thereto. For example, the oil passage may be configured with plural rectilinear oil passages that intersect at an angle other than 90 degrees.

The principles, preferred embodiments and mode of operation of the present invention have been described in the foregoing specification; however, the invention which is intended to be protected is not to be construed as limited to the particular embodiments disclosed, i.e. all such variations, changes and equivalents which fall under the scope of the present invention as defined in the appended claims are embraced thereby.

A fluid pump unit (100) includes: an electric pump unit (10) configured to circulate a fluid in a gear mechanism (200); a cooling unit (20) configured to cool the circulating fluid; and a flow path distribution member (30) disposed on the gear mechanism and including therein a first flow path (31) connected to the electric pump unit and a second flow path (32) connected to the cooling unit, the electric pump unit and the cooling unit being installed on the flow path distribution member.

## Claims

1. A fluid pump unit (100) comprising:
an electric pump unit (10) configured to circulate a fluid in a gear mechanism (200);
a cooling unit (20) configured to cool the circulating fluid; and
a flow path distribution member (30) disposed on the gear mechanism (200) and including therein a first flow path (31) connected to the electric pump unit (10) and a second flow path (32) connected to the cooling unit (10), the electric pump unit (10) and the cooling unit (20) being installed on the flow path distribution member (30),
**characterized in that**
the flow path distribution member (30) has a plate shape, the cooling unit (20) is installed on a first surface (30a) of the flow path distribution member (30) of the plate shape, and the electric pump unit (10) is installed on a second surface (30b) that is different from the first surface (30a),
the first surface (30a) is a surface (30a) located at an opposite side to a side of the flow path distribution member (30) which is disposed on a side of the gear mechanism (200), and the second surface (30b) is a side surface (30b) of the flow path distribution member (30) which is orthogonal to the first surface (30a), and
the electric pump unit (10), the cooling unit (20) and the flow path distribution member (30) are attached to the gear mechanism (200) in a state of being integrated.

2. The fluid pump unit (100) according to claim 1,
wherein an ejection port (11) and a suction port (12) of the electric pump unit (10) are connected to the first flow path (31) in a liquid-tight manner, and a discharge port (21) and an introducing port (22) of the cooling unit (20) are connected to the second flow path (32) in a liquid-tight manner.

3. The fluid pump unit (100) according to claim 1 or 2, further comprising:
an orifice (33) provided in the second flow path (32) which is configured to adjust a flow rate of the fluid.

4. The fluid pump unit (100) according to any one of claims 1 to 3, further comprising:
a detecting unit (35) provided in the flow path distribution member (30) which is configured to detect a state of the fluid.

## Patentansprüche

1. Fluidpumpeneinheit (100), die Folgendes aufweist:
eine elektrische Pumpeneinheit (10), die gestaltet ist, um ein Fluid in einem Getriebemechanismus (200) zu zirkulieren;
eine Kühlungseinheit (20), die gestaltet ist, um das zirkulierende Fluid zu kühlen; und
ein Strömungswegverteilungsbauteil (30), das an dem Getriebemechanismus (200) angeordnet ist und darin einen ersten Strömungsweg (31), der mit der elektrischen Pumpeneinheit (10) verbunden ist, und einen zweiten Strömungsweg (32) umfasst, der mit der Kühlungseinheit (10) verbunden ist, wobei die elektrische Pumpeneinheit (10) und die Kühlungseinheit (20) an dem Strömungswegverteilungsbauteil (30) installiert sind,
**dadurch gekennzeichnet, dass**
das Strömungswegverteilungsbauteil (30) eine Plattenform hat, die Kühlungseinheit (20) an einer ersten Fläche (30a) des Strömungswegverteilungsbauteils (30) der Plattenform installiert ist, und die elektrische Pumpeneinheit (10) an einer zweiten Fläche (30b) installiert ist, die von der ersten Fläche (30a) verschieden ist,
die erste Fläche (30a) eine Fläche (30a) ist, die an einer entgegengesetzten Seite zu einer Seite des Strömungswegverteilungsbauteils (30) angeordnet ist, die an einer Seite des Getriebemechanismus (200) angeordnet ist, und die zweite Fläche (30b) eine Seitenfläche (30b) des Strömungswegverteilungsbauteils (30) ist, die orthogonal zu der ersten Fläche (30a) ist, und
die elektrische Pumpeneinheit (10), die Kühlungseinheit (20) und das Strömungswegverteilungsbauteil (30) an dem Getriebemechanismus (200) in einem integrierten Zustand angebracht sind.

2. Fluidpumpeneinheit (100) nach Anspruch 1,
wobei ein Ausstoßanschluss (11) und ein Sauganschluss (12) der elektrischen Pumpeneinheit (10) mit dem ersten Strömungsweg (31) in einer flüssigkeitsdichten Weise verbunden sind, und ein Abgabeanschluss (21) und ein Einbringungsanschluss (22) der Kühlungseinheit (20) mit dem zweiten Strömungsweg (32) in einer flüssigkeitsdichten Weise verbunden sind.

3. Fluidpumpeneinheit (100) nach Anspruch 1 oder 2, die des Weiteren Folgendes aufweist:
eine in dem zweiten Strömungsweg (32) vorgesehene Blende (33), die gestaltet ist, um eine Strömungsrate des Fluids einzustellen.

4. Fluidpumpeneinheit (100) nach einem der Ansprüche 1 bis 3, die des Weiteren Folgendes aufweist:
eine in dem Strömungswegverteilungsbauteil (30) vorgesehene Erfassungseinheit (35), die gestaltet ist, um einen Zustand des Fluids zu erfassen.

## Revendications

1. Unité de pompe à fluide (100) comprenant:
une unité de pompe électrique (10) configurée pour faire circuler un fluide dans un mécanisme d'engrenage (200);
une unité de refroidissement (20) configurée pour refroidir le fluide circulant; et
un élément de distribution de trajectoire d'écoulement (30) disposé sur le mécanisme d'engrenage (200) et comprenant à l'intérieur de ce dernier, une première trajectoire d'écoulement (31) raccordée à l'unité de pompe électrique (10) et une seconde trajectoire d'écoulement (32) raccordée à l'unité de refroidissement (10), l'unité de pompe électrique (10) et l'unité de refroidissement (20) étant installées sur l'élément de distribution de trajectoire d'écoulement (30),
**caractérisée en ce que**:
l'élément de distribution de trajectoire d'écoulement (30) a une forme de plaque, l'unité de refroidissement (20) est installée sur une première surface (30a) de l'élément de distribution de trajectoire d'écoulement (30) en forme de plaque, et l'unité de pompe électrique (10) est installée sur une seconde surface (30b) qui est différente de la première surface (30a),
la première surface (30a) est une surface (30a) positionnée sur un côté opposé à un côté de l'élément de distribution de trajectoire d'écoulement (30) qui est disposé sur un côté du mécanisme d'engrenage (200), et la seconde surface (30b) est une surface latérale (30b) de l'élément de distribution de trajectoire d'écoulement (30) qui est orthogonale à la première surface (30a), et
l'unité de pompe électrique (10), l'unité de refroidissement (20) et l'élément de distribution de trajectoire d'écoulement (30) sont fixés au mécanisme d'engrenage (200) dans un état dans lequel ils sont solidaires.

2. Unité de pompe à fluide (100) selon la revendication 1,
dans laquelle un orifice d'éjection (11) et un orifice d'aspiration (12) de l'unité de pompe électrique (10) sont raccordés à la première trajectoire d'écoulement (31) d'une manière étanche au fluide, et un orifice de décharge (21) et un orifice d'introduction (22) de l'unité de refroidissement (20) sont raccordés à la seconde trajectoire d'écoulement (32) d'une manière étanche au fluide.

3. Unité de pompe à fluide (100) selon la revendication 1 ou 2, comprenant en outre:
un orifice (33) prévu dans la seconde trajectoire d'écoulement (32) qui est configuré pour ajuster un débit du fluide.

4. Unité de pompe à fluide (100) selon l'une quelconque des revendications 1 à 3, comprenant en outre:
une unité de détection (35) prévue dans l'élément de distribution de trajectoire d'écoulement (30) qui est configurée pour détecter un état du fluide.
